(19) Europäisches Patentamt

European Patent Office

Office européen des brevets

(11) Veröffentlichungsnummer: **0 401 225 B1**

(12) **EUROPÄISCHE PATENTSCHRIFT**

(45) Veröffentlichungstag der Patentschrift: **03.11.93**

(21) Anmeldenummer: **89900577.1**

(22) Anmeldetag: **21.12.88**

(86) Internationale Anmeldenummer:
**PCT/DE88/00776**

(87) Internationale Veröffentlichungsnummer:
**WO 89/07243 (10.08.89 89/18)**

(51) Int. Cl.⁵: **G01F 1/68**

(54) **SCHALTGEREGELTE STRÖMUNGSSONDE.**

(30) Priorität: **06.02.88 DE 3803611**

(43) Veröffentlichungstag der Anmeldung:
**12.12.90 Patentblatt  90/50**

(45) Bekanntmachung des Hinweises auf die
Patenterteilung:
**03.11.93 Patentblatt  93/44**

(84) Benannte Vertragsstaaten:
**FR GB**

(56) Entgegenhaltungen:
**WO-A-87/07016**

(73) Patentinhaber: **ROBERT BOSCH GMBH
Postfach 30 02 20
D-70442 Stuttgart(DE)**

(72) Erfinder: **KLEINHANS, Josef
Gerokstrasse 1/2
D-7143 Vaihingen/Enz(DE)**

**Beschreibung**

Stand der Technik

Die Erfindung betrifft eine Schaltungsanordnung für eine schaltgeregelte Strömungssonde mit einer Brückenschaltung, deren Diagonalspannung einem Schaltregelglied zuführbar ist, welchem Heizspannungsimpulse für die Strömungssonde zugeführt werden und welches die der Strömungssonde zugeführte Heizleistung regelt und ein der die Strömungssonde umströmenden Luftmasse proportionales Ausgangssignal abgibt, wie sie beispielsweise aus der DE-PS 24 48 304 bekannt ist. Bei der bekannten Schaltungsanordnung weist der Heizstrom einen Gleichstromanteil und einen diesem überlagerten Wechselstromanteil aus einer Reihe von Heizstromimpulsen konstanter Dauer auf. Die Impulsfolgefrequenz der Heizstromimpulse ändert sich in Abhängigkeit von der Luftmasse. An die Brückendiagonale ist bei der bekannten Schaltungsanordnung ein Operationsverstärker angeschlossen, dessen Ausgangsspannung in eine der angesaugten Luftmenge proportionale Frequenz gewandelt wird. Diese Frequenz steuert einerseits den der Brückenschaltung zugeführten Wechselstrom und dient andererseits als Steuergröße für eine Kraftstoffeinspritzanlage. Die Ausgangsspannung des Operationsverstärkers wird hierzu in eine Frequenz gewandelt, mittels eines Spannungs-Frequenz-Wandlers, und dessen Ausgangsspannung wird einer Linearisierungsfunktion unterworfen.

Aus WO87/07016 sind weiter ein Verfahren und eine Schaltungsanordnung zum Messen des Luftdurchsatzes im Ansaugrohr einer Brennkraftmaschine bekannt, bei denen die Diagonalspannung einer Meßbrücke, die mit einem Strömungsmeßorgan thermisch gekoppelt ist, nach Verstärkung einem Spannungs-Frequenzwandler zugeführt wird, an dessen Ausgang eine der Diagonalspannung der Brückenschaltung proportionale Frequenz zur Weiterverarbeitung ansteht. Diese Frequenz wird zur Triggerung einer monostabilen Kippschaltung verwendet, die das Strömungsmeßorgan taktweise mit einer Spannungsquelle verbindet.

Für zahlreiche Zwecke ist es allerdings wünschenswert, als Ausgangssignal einer schaltgeregelten Strömungssonde eine analoge Ausgangsspannung zu erhalten. Diese sollte von einer die Schaltungsanordnung versorgenden Batteriespannung unabhängig sein, damit sich Änderungen der Batteriespannung nicht auf den Pegel des analogen Ausgangssignals der Strömungssonde auswirken.

Vorteile der Erfindung

Die erfindungsgemäße Schaltungsanordnung für eine schaltgeregelte Strömungssonde mit einer Brückenschaltung, deren Diagonalspannung einem Schaltregelglied zuführbar ist, welchem Heizspannungsimpulse für die Strömungssonde zugeführt werden und welches die der Strömungssonde zugeführte Heizleistung regelt und ein der die Strömungssonde umströmenden Luftmasse proportionales Ausgangssignal abgibt, bei welcher ein erster Regelkreis, dem die Heizspannungsimpulse zugeführt werden und der ein erstes Ausgangssignal abgibt, das von der Diagonalspannung abgeleitet ist, und ein zweiter Regelkreis vorgesehen sind, dem das erste Ausgangssignal und ein Eingangssignal zugeführt werden, welches von den Heizspannungsimpulsen, einer Bezugsgröße sowie dem ersten Ausgangssignal und dem Eingangssignal abhängt, hat insbesondere den Vorteil, daß beim Einschalten der erfindungsgemäßen Schaltungsanordnung keine Dynamikprobleme auftreten und daß die Ausgangsspannung auch bei niedriger Batteriespannung (Versorgungsspannung) genau ist. Darüber hinaus benötigen die bei der erfindungsgemäßen Schaltungsanordnung verwendeten elektronischen Halbleiterbauteile nur eine verhältnismäßig geringe Verlustleistung. Die Auftrennung in zwei Regelkreise führt zu einer besonders feinfühligen Regelung; während der erste Regelkreis noch eine Abhängigkeit von der Batteriespannung aufweist, wird genau diese Abhängigkeit mit Hilfe des zweiten Regelkreises erfaßt und ausgeregelt.

Dabei ist im ersten Regelkreis zur Erfassung der Heizspannungsimpulse eine Abtast-/Halteschaltung (Sample-and-Hold-Schaltung) mit nachgeschaltetem Sägezahngenerator vorgesehen. Das Ausgangssignal des Sägezahngenerators wird einem Eingang einer Vergleicherschaltung zugeführt, an deren anderem Eingang das von der Brückendiagonale abgeleitete Ausgangssignal anliegt und deren Ausgang an einen Leistungsschalter, vorzugsweise einen, elektronischen Schalter, zur Regelung der Heizspannungsimpulse angeschlossen ist.

Der zweite Regelkreis weist dabei ein Verstärkerglied auf, an dessen einem Eingang das von der Brückenschaltung abgeleitete Ausgangssignal anliegt, an dessen anderem Eingang das Eingangssignal anliegt, und dessen Ausgang das der Luftmasse proportionale Ausgangssignal abgibt. Vorzugsweise ist dieses Verstärkerglied ein Operationsverstärker, um eine hohe Genauigkeit bereitzustellen.

Zur Erzeugung das Eingangssignals ist eine Vergleicherschaltung vorgesehen, deren einer Eingang an den Ausgang des Sägezahngenerators und deren anderer Eingang an den Ausgang des Verstärkerglieds angeschlossen ist, weiterhin eine Spannungsquelle, die an den Ausgang der Vergleicherschaltung angeschlossen ist, sowie ein dem Ausgang der Vergleicherschaltung nachgeschaltetes Schaltglied zur Abgabe eines Mittelwertes des diesem zugeführten Signals. Besonders einfach wird diese Ausgestaltung der erfindungsgemäßen Schaltungsanordnung, wenn das Schaltglied ein Tiefpaßfilter ist.

Da die Spannungsquelle zur Abgabe der Bezugsgröße präzise arbeiten muß, da auf der Grundlage dieser Bezugsgröße das Eingangssignal erzeugt wird, welches dem Verstärkerglied zugeführt wird, sollte die Spannungsquelle eine hochpräzise Referenzspannungsquelle aufweisen.

Bei einer besonders vorteilhaften Ausgestaltung der erfindungsgemäßen Schaltungsanordnung wird das Erfordernis einer hochpräzisen Referenzspannungsquelle dadurch umgangen, daß die Spannungsquelle einfach aus einem Widerstand besteht, der an einen Anschluß zur Abgabe des der Luftmasse proportionalen Ausgangssignals angeschlossen ist. Dadurch, daß das Signal der Spannungsquelle von dem Ausgangssignal, welches der Luftmasse proportional ist, abgeleitet wird, ergibt sich daher eine wesentliche Vereinfachung und Kostenersparnis.

Zeichnung

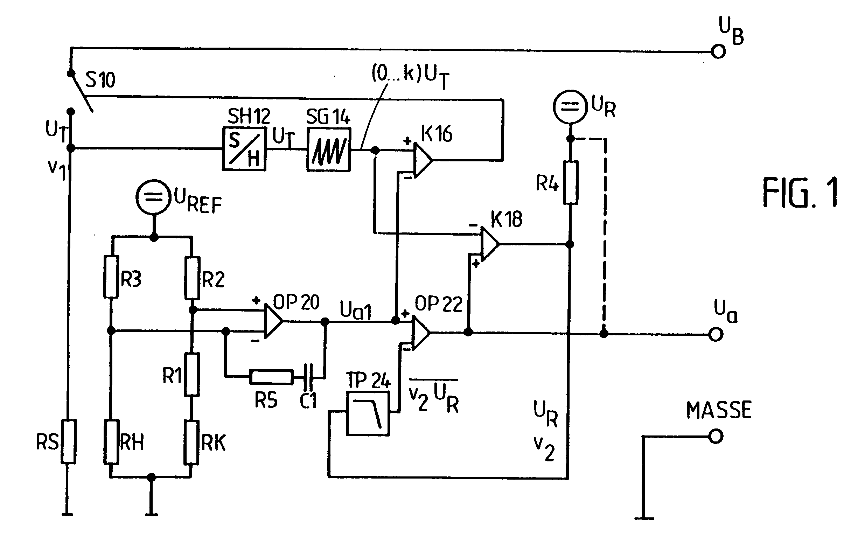

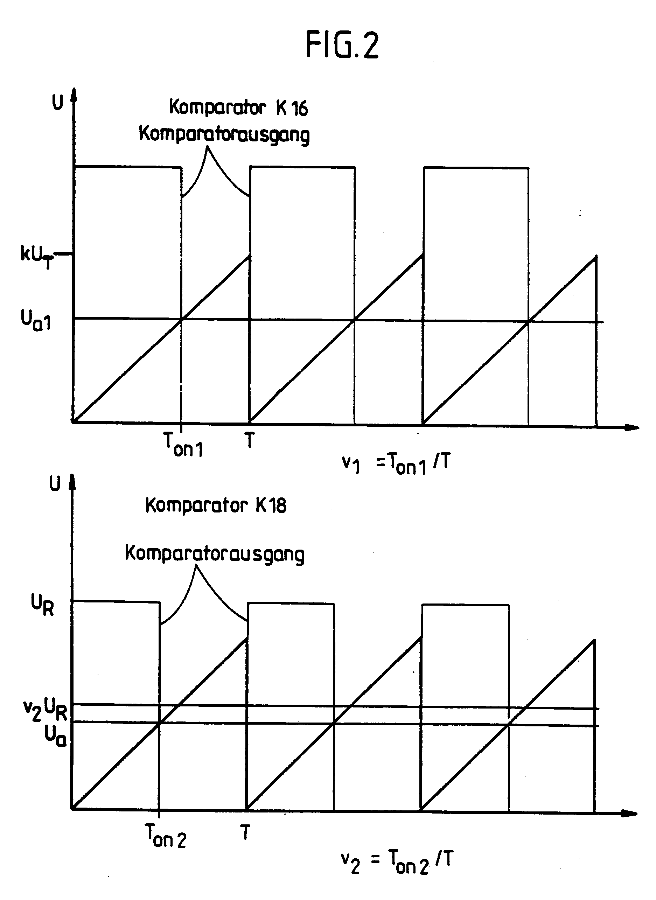

Die Erfindung wird nachstehend anhand eines zeichnerisch dargestellten bevorzugten Ausführungsbeispiels näher erläutert, aus welchem weitere Vorteile und Merkmale hervorgehen. Figur 1 zeigt ein Blockschaltbild dieser bevorzugten Ausführungsform und Figur 2 zeigt Diagramme der an zwei Komparatoren der in Figur 1 dargestellten Schaltung auftretenden Spannungsverläufe.

Beschreibung des Ausführungsbeispiels

Bei dem Ausführungsbeispiel handelt es sich um einen Schaltregler für Heißfilmluftmassenmesser mit Batteriespannungstaktung.

Ein elektronischer Schalter S10 ist einerseits an eine Batteriespannung $U_B$ und andererseits an einen Heizwiderstand RS angeschlossen, dessen anderer Anschluß an Masse liegt. Durch geeignete Steuerung des Schalters S10 mit einem Tastverhältnis $v_1$ wird der Heizwiderstand RS mit Heizspannungsimpulsen $U_T$ versorgt. Der Heizwiderstand RS steht in thermischem Kontakt mit einem Widerstand RH, der mit weiteren Widerständen R1,R2,R3,RK in einer Brückenschaltung angeordnet ist. Das untere Ende der Brückenschaltung ist an Masse angeschlossen und das obere Ende an eine erste Referenzspannungsquelle $U_{REF}$.

Eine Verstimmung der Widerstandsbrücke aus den Widerständen R1,R2,R3,RK und RH wird durch einen in die Brückendiagonale geschalteten Operationsverstärker OP20 festgestellt, der zwischen seinem invertierenden Eingang (-) und seinem Ausgang durch ein RC-Glied aus einem Widerstand R5 und einem Kondensator C1 überbrückt ist.

An seinem Ausgang gibt der Operationsverstärker OP20 ein der Diagonalspannung der Brückenschaltung und damit letztlich der den Widerstand RH umströmenden Luftmasse proportionales Signal $U_{a1}$ ab.

Die von dem Schalter S10 abgegebenen Heizspannungsimpulse $U_T$ werden einer Abtasthalteschaltung (Sample-and-Hold-Schaltung) SH12 zugeführt. Am Ausgang der Sample-and-Hold-Schaltung SH12 stehen daher die Heizspannungsimpulse $U_T$ an und gelangen von dort auf den Eingang eines Sägezahngenerators SG14. Der Signalhub des Sägezahngenerators SG14 entspricht daher der Spannung $U_T$ multipliziert mit einem Faktor, der zwischen dem Wert O und einem Wert k liegt.

Das Ausgangssignal des Sägezahngenerators SG14 wird auf einen Eingang (+) einer Vergleicherschaltung (Komparator) K16 gegeben, an deren anderem Eingang (-) das von dem Operationsverstärker OP20 abgegebene Ausgangssignal $U_{a1}$ anliegt. Der Ausgang des Komparators K16 ist mit dem Schalter S10 zu dessen Betätigung verbunden und steuert daher das Tastverhältnis $v_1$ der Heizspannungsimpulse $U_T$ für den Heizwiderstand RS.

Das Ausgangssignal des Sägezahngenerators SG14 liegt ebenfalls an einem Eingang (-) eines weiteren Komparators K18 an. Das Ausgangssignal des Operationsverstärkers OP20 ist an einen Eingang (+) eines weiteren Operationsverstärkers OP22 geführt, und dieser Eingang ist daher auch mit dem Eingang (-) des Komparators K16 verbunden. Der Ausgang des Operationsverstärkers OP22 ist an den anderen Eingang (+) des Komparators K18 angeschlossen.

Über einen Widerstand R4 ist eine hochpräzise Referenzspannungsquelle $U_R$ mit dem Ausgang des Komparators K18 verbunden. Am Ausgang des Komparators K18 liegt daher eine Spannung $U_R$ mit einem Tastverhältnis $v_2$ an, welches von dem Komparator K18 bestimmt wird. Der Ausgang des Komparators K18 ist mit dem Eingang eines Tiefpaßfilters TP24 verbunden, an dessen Ausgang daher in Folge der Mittelwertbildung über die Rechteckspannung des Komparatorausgangs eine Gleichspannung $\overline{v_2 U_R}$ ansteht. Diese Gleichspannung wird auf den anderen Eingang (-) des Operationsverstärkers OP22 gegeben.

Das gewünschte analoge Ausgangssignal $U_a$, welches der Luftmasse proportional ist, die die Strömungssonde umströmt, liegt daher am Ausgang des Operationsverstärkers OP22 an.

Nachstehend wird unter Bezug auf die in Figur 2 dargestellten Spannungsdiagramme die Funktionsweise der in Figur 1 dargestellten Schaltung näher erläutert.

Der Heizwiderstand RS wird im Tastverhältnis $v_1$ mit der Taktspannung $U_T$ beaufschlagt. Im Durchschaltzustand des Leistungsschalters S10 ist die Spannung $U_T$ gleich der Versorgungsspannung $U_B$. Die Taktspannung $U_T$ wird an das Sample-and-Hold-Glied SH12 gegeben, und die am Ausgang von SH12 anstehende stationäre Spannung $U_T$ wird in dem Sägezahngenerator SG14 so ausgewertet, daß an dessen Ausgang der Signalhub von 0 Volt bis $k * U_T$ reicht. Diese Spannung wird am Komparator K16 mit der Ausgangsspannung $U_{a1}$ des Auswerteverstärkers OP20 der Widerstandsbrücke verglichen. Der Ausgang des Komparators K16 steuert wiederum das Tastverhältnis $v_1$.

Bei einem Abgleich der Widerstandsbrücke ist RH = (R1 + RK)/R2 * R3 = const., und daher wegen RH = Ro * (1 + TKH * $T_{ü}$) gleich $T_{ü}$ = const., wobei TKH der Temperaturkoeffizient des Widerstands RH ist und $T_{ü}$ dessen Übertemperatur. Daher ist also auch $T_{ü}$ konstant, und da der Widerstand RH mit dem Widerstand RS in engem thermischen Kontakt steht, ist die Übertemperatur des Widerstands RS gleich der Übertemperatur des Widerstands RH. Für den Widerstand RS gilt die King'sche Gleichung für die zugeführte Leistung Ps

$$Ps = g(\dot{m}) * T_{ü} \qquad (1)$$

wobei $g(\dot{m})$ eine von der Luftmasse abhängige Funktion ist. Wegen

$$\overline{Ps} = v_1 * \hat{Ps} = v_1 * (U_T)^2 / RS$$

folgt:

$$v_1 * (U_T)^2 / RS = g(\dot{m}) * T_{ü} \qquad (2)$$

Am Komparator K16 gilt:

$$U_{a1}/(k * U_T) = T_{on1}/T = v_1 \qquad (3)$$

wobei $T_{on1}$ die Einschaltzeit ist. Durch Einsetzen von Gleichung (3) in Gleichung (2) ergibt sich:

$$U_{a1}/(k * U_T) * (U_T)^2 / RS = g(\dot{m}) * T_{ü} \qquad (4)$$

bzw.

$$U_{a1} = (k * g(\dot{m}) * T_{ü} * RS)U_T$$

Die Ausgangsspannung $U_{a1}$ des Operationsverstärkers OP20 ist daher also noch von der Spannung $U_T$ der Heizspannungsimpulse und damit von der Batteriespannung $U_B$ abhängig. Diese Abhängigkeit wird in dem zweiten Regelkreis eliminiert wie nachstehend angegeben:
Analog zur Gleichung (3) gilt am Komparator K18:

$$v_2 = U_a/(k * U_T) \qquad (5)$$

Von der am Ausgang des Komparators K18 anstehenden Rechteckspannung mit Werten zwischen 0 Volt und der Spannung $U_R$ wird im Tiefpaßfilter T24 der Mittelwert gebildet. Am invertierenden Eingang des Operationsverstärkers OP22 steht daher folgende Gleichspannung an:

$$v_2 * U_R = U_a/(k * U_T) * U_R \qquad (6)$$

Diese Gleichspannung wird im Operationsverstärker OP22 mit der vom Operationsverstärker OP20 abgege-

benen Spannung $U_{a1}$ verglichen, und der Operationsverstärker OP22 regelt seine Ausgangsspannung $U_a$ bei Abweichungen entsprechend ein. Daher gilt am Ausgang des Operationsverstärkers OP22:

$$U_a/(k * U_T) * U_R = U_{a1} = (k * g(\dot{m})) * T_{\ddot{u}} * RS/U_T \qquad (7)$$

oder, nach $U_a$ aufgelöst:

$$U_a = (k^2 * T_{\ddot{u}} * RS)/U_R * g(\dot{m}) \qquad (8)$$

Da k, $T_{\ddot{u}}$, RS und $U_R$ konstant sind, ist die gewünschte analoge Ausgangsspannung $U_a$ nur noch vom Luftmassendurchfluß durch die erfindungsgemäße Strömungssonde abhängig.

Diese Verhältnisse sind noch einmal in den in Figur 2 dargestellten Signaldiagrammen verdeutlicht, wobei in der oberen Hälfte der Figur 2 die am ersten Komparator K16 und in der unteren Hälfte der Figur 2 die am zweiten Komparator K18 bestehenden Spannungsverhältnisse wiedergegeben sind.

Eine besonders vorteilhafte Ausgestaltung der erfindungsgemäßen Gestaltungsanordnung ist gestrichelt in der rechten Hälfte der Figur 1 angegeben. Die gestrichelte Linie, welche den Ausgangsanschluß $U_a$ mit dem oberen Anschluß des Widerstands R4 verbindet, macht nämlich die hochgenaue Referenzspannungsquelle $U_R$ entbehrlich. Dies sieht man einfach, wenn man in Gleichung (8) für die Spannung $U_R$ den Wert $U_a$ einsetzt:

$$U_a = k * \sqrt{T_{\ddot{u}} * RS * g(\dot{m})} \qquad (9)$$

Durch diese einfache Schaltungsmaßnahme ergibt sich daher eine wesentliche Vereinfachung und Kostenersparnis. Der erzielbare Vorteil wird anhand der Tatsache deutlich, daß die weitere Referenzspannungsquelle $U_{REF}$, welche die Widerstandsbrücke aus den Widerständen R1,R2,R3,RK und RH versorgt, längst nicht so genau sein muß wie die Referenzspannungsquelle $U_R$.

Die erfindungsgemäße Schaltungsanordnung läßt sich einfach im Austausch zu bestehenden Analogreglerschaltungen einsetzen, da die Ausgangsspannung $U_a$ der erfindungsgemäßen Schaltungsanordnung bis auf einen einstellbaren Proportionalitätsfaktor k der Ausgangsspannung $U_{analog}$ der Analogversion entspricht, wie ein Vergleich mit Gleichung (1) ergibt:

$$U^2_{analog}/RS = g(\dot{m}) * T_{\ddot{u}} \qquad (10)$$

$$U_{analog} = \sqrt{g(\dot{m}) * T_{\ddot{u}} * RS} \qquad (11)$$

$$U_a = k*U_{analog} \text{ bzw. } U_a = k^2*U^2_{analog}/U_R \qquad (12)$$

## Patentansprüche

1. Schaltungsanordnung für eine schaltgeregelte Strömungssonde mit einer Brückenschaltung, deren Diagonalspannung einem Schaltregelglied zuführbar ist, welchem Heizspannungsimpulse für die Strömungssonde zugeführt werden und welches die der Strömungssonde zugeführte Heizleistung regelt und ein der die Strömungssonde umströmenden Luftmasse proportionales Ausgangssignal abgibt, dadurch gekennzeichnet, daß ein erster Regelkreis, dem die Heizspannungsimpulse ($U_T$) zugeführt werden und der ein erstes Ausgangssignal ($U_{a1}$), das von der Diagonalspannung abgeleitet ist, abgibt, und ein zweiter Regelkreis vorgesehen sind, dem das erste Ausgangssignal ($U_{a1}$) und ein Eingangssignal $\overline{(v_2 U_R)}$ zugeführt werden, welches von den Heizspannungsimpulsen ($U_T$),einer Bezugsgröße ($U_R$) sowie dem ersten Ausgangssignal ($U_{a1}$) und dem Ausgangssignal ($v_2 U_R$) einer Vergleicherschaltung (K18) abhängt, daß im ersten Regelkreis zur Erfassung der Heizspannungsimpulse ($U_T$) eine Abtast-/Halteschaltung (Sample-and-Hold) (SH12) mit nachgeschaltetem Sägezahngenerator (SG14) vorgesehen ist, daß das Ausgangssignal des Sägezahngenerators (SG14) an einem Eingang (+) einer Vergleicherschaltung (K16) anliegt, deren anderem Eingang (-) das Ausgangssignal ($U_{a1}$) zugeführt wird, und deren Ausgang an einen Leistungsschalter (S10) zur Regelung der Heizspannungsimpuls

EP 0 401 225 B1

(U$_T$) angeschlossen ist, daß der zweite Regelkreis ein Verstärkerglied (OP22) aufweist, an dessen einem Eingang (+) das Ausgangssignal (U$_{a1}$) anliegt, an dessem anderem Eingang (-) das Eingangssignal $\overline{(v_2 U_R)}$ anliegt, und dessen Ausgang das der Luftmasse proportionale Ausgangssignal (U$_a$) abgibt und daß zur Erzeugung des Eingangssignals $\overline{(v_2 U_R)}$ eine Vergleicherschaltung (K18) vorgesehen ist, deren einer Eingang (-) an den Ausgang des Sägezahngenerators (SG14) und deren anderer Eingang (+) an den Ausgang des Verstärkerglieds (OP22) angeschlossen ist, und weiter eine Spannungsquelle (U$_R$, R4), die an den Ausgang der Vergleicherschaltung (K18) angeschlossen ist, sowie ein dem Ausgang der Vergleicherschaltung (K18) nachgeschaltetes Schaltglied (TP24) zur Abgabe eines Mittelwertes $\overline{(v_2 U_R)}$ des diesem zugeführten Signals (v$_2$ U$_R$) vorgesehen sind.

2. Schaltungsanordnung nach Anspruch 1, dadurch gekennzeichnet, daß das Verstärkerglied ein Operationsverstärker (OP22) ist.

3. Schaltungsanordnung nach einem der Ansprüche 1 und 2, dadurch gekennzeichnet, daß das Schaltglied ein Tiefpaßfilter (TP24) ist.

4. Schaltungsanordnung nach einem der Ansprüche 1 bis 3, dadurch gekennzeichnet, daß die Spannungsquelle (U$_R$, R4) eine hochpräzise Referenzspannungsquelle (U$_R$) aufweist.

5. Schaltungsanordnung nach einem der Ansprüche 1 bis 4, dadurch gekennzeichnet, daß die Spannungsquelle einen Widerstand (R4) aufweist, der den Anschluß zur Abgabe des der Luftmasse proportionalen Ausgangssignals (U$_a$) mit dem Ausgang der Vergleicherschaltung (K18) verbindet.

**Claims**

1. Circuit arrangement for a switch-regulated flow probe having a bridge circuit, the diagonal voltage of which can be fed to a switch regulating element, to which heating voltage pulses for the flow probe are fed and which regulates the heating power fed to the flow probe and emits an output signal proportional to the air mass circumcirculating the flow probe, characterised in that a first regulating loop, to which the heating voltage pulses (U$_T$) are fed and which emits a first output signal (U$_{a1}$), which is derived from the diagonal voltage, and a second regulating loop are provided, to which second regulating loop the first output signal (U$_{a1}$) and an input signal $\overline{(v_2 U_R)}$ are fed, which input signal is dependent upon the heating voltage pulses (U$_T$), a reference quantity (U$_R$) as well as the first output signal (U$_{a1}$) and the output signal (v$_2$ U$_R$) of a comparator circuit (K18), in that in the first regulating loop to detect the heating voltage pulses (U$_T$) a sample and hold circuit (SH12) with a downstream sawtooth generator (SG14) is provided, in that the output signal of the sawtooth generator (SG14) is present at an input (+) of a comparator circuit (K16), to the other input (-) of which the output signal (U$_{a1}$) is fed, and the output of which is connected to a power switch (S10) for the regulation of the heating voltage pulses (U$_T$), in that the second regulating loop exhibits an amplifier element (OP22), at one input (+) of which the output signal (U$_{a1}$) is present, at the other input (-) of which the input signal $\overline{(v_2 U_R)}$ is present, and the output of which emits the output signal (U$_a$) proportional to the air mass, and in that to generate the input signal $\overline{(v_2 U_R)}$ a comparator circuit (K18) is provided, one input (-) of which is connected to the output of the sawtooth generator (SG14) and the other input (+) of which is connected to the output of the amplifier element (OP22), and furthermore a voltage source (U$_R$, R4), which is connected to the output of the comparator circuit (K18), as well as a switching element (TP24), downstream of the output of the comparator circuit (K18), to emit a mean value $\overline{(v_2 U_R)}$ of the signal (v$_2$ U$_R$) fed to the latter are provided.

2. Circuit arrangement according to Claim 1, characterised in that the amplifier element is an operational amplifier (OP22).

3. Circuit arrangement according to one of Claims 1 and 2, characterised in that the switching element is a low pass filter (TP24).

4. Circuit arrangement according to one of Claims 1 to 3, characterised in that the voltage source (U$_R$, R4) exhibits a highly accurate reference voltage source (U$_R$).

6

**5.** Circuit arrangement according to one of Claims 1 to 4, characterized in that the voltage source exhibits a resistor (R4), which connects the connection for the emission of the output signal ($U_a$) proportional to the air mass to the output of the comparator circuit (K18).

**Revendications**

**1.** Circuit pour une sonde d'écoulement électriquement asservie avec un circuit en pont dont la tension diagonale peut être appliquée à un élément fonctionnel du régulateur auquel sont appliquées des impulsions de tension de chauffage pour la sonde d'écoulement et qui régule la puissance de chauffage appliquée à la sonde d'écoulement et délivre un signal de sortie proportionnel à la masse d'air s'écoulant autour de la sonde, circuit caractérisé en ce qu'on prévoit un premier circuit de régulation auquel sont appliquées les impulsions de tension de chauffage ($U_T$) et qui délivre un premier signal de sortie ($U_{a1}$), qui est dérivé de la tension diagonale et un second circuit de régulation, auquel le premier signal de sortie ($U_{a1}$) et un signal d'entrée ($v_2 U_R$) sont appliqués, signal qui dépend des impulsions de tension de chauffage ($U_T$) , d'une grandeur de référence ($U_R$) ainsi que du premier signal de sortie ($U_{a1}$) et du signal de sortie ($v_2 U_R$) d'un circuit de comparaison (K18), en ce que dans le premier circuit de régulation, on prévoit pour détecter les impulsions de tension de chauffage ($U_T$),un circuit de balayage-arrêt (sample-and-hold) (SH12) avec un générateur en dents de scie monté en aval (SG14), en ce que le signal de sortie du générateur en dents de scie (SG14) se trouve sur une entrée (+) d'un circuit de comparaison (K16), à l'autre entrée (-) duquel est appliqué le signal de sortie ($U_{a1}$) et dont la sortie est raccordée à un interrupteur de puissance (S10) pour la régulation de l'impulsion de tension de chauffage ($U_T$), en ce que le deuxième circuit de régulation présente un organe d'amplification (OP22), sur l'une des entrées (+) duquel se trouve le signal d'en trée $\overline{(v_2 U_R)}$ et dont la sortie délivre le signal de sortie ($U_a$) proportionnel à la masse d'air et en ce que pour produire le signal d'entrée $\overline{(v_2 U_R)}$, on prevoit un circuit de comparaison (K18), dont une entrée (-) est raccordée à la sortie du générateur en dents de scie (SG14) et dont l'autre entrée (+) est raccordée à la sortie de l'organe d'amplification (OP22) et en outre en ce qu'on prévoit une source de tension ($U_R$, R4) qui est raccordée à la sortie du circuit de comparaison (K18), ainsi qu'un organe d'interruption (TP24) monté en aval de la sortie du circuit de comparaison (K18) pour délivrer une valeur moyenne $\overline{(v_2 U_R)}$ du signal appliqué à cet organe ($v_2 U_R$).

**2.** Circuit selon la revendication 1, caractérisé en ce que l'organe d'amplification est un amplificateur opérationnel (OP22).

**3.** Circuit selon l'une des revendications 1 et 2, caractérisé en ce que l'organe d'interruption est un filtre passe-bas (TP24).

**4.** Circuit selon l'une des revendications 1 à 3, caractérisé en ce que la source de tension ($U_R$, R4) présente une source de tension de référence hautement précise ($U_R$).

**5.** Circuit selon l'une des revendications 1 à 4, caractérisé en ce que la source de tension présente une résistance (R4) qui relie le raccord servant à délivrer le signal de sortie proportionnel à la masse d'air ($U_a$) à la sortie du circuit de comparaison (K18).

FIG. 1

## FIG.2

$v_1 = T_{on1}/T$

$v_2 = T_{on2}/T$